## Europäisches Patentamt
## European Patent Office
## Office européen des brevets

(19)

(11) Veröffentlichungsnummer: **0 091 614**
**B1**

(12) **EUROPÄISCHE PATENTSCHRIFT**

(45) Veröffentlichungstag der Patentschrift:
02.08.89

(51) Int. Cl.⁴: **H 04 M 19/02**

(21) Anmeldenummer: **83103180.2**

(22) Anmeldetag: **30.03.83**

(54) Schaltungsanordnung für Fernmeldevermittlungsanlagen, insbesondere Fernsprechvermittlungsanlagen, mit Schalteinrichtungen zur Aussendung von Signalen.

(30) Priorität: **02.04.82 DE 3212383**
**17.05.82 DE 3218506**

(43) Veröffentlichungstag der Anmeldung:
**19.10.83 Patentblatt 83/42**

(45) Bekanntmachung des Hinweises auf die Patenterteilung:
**02.08.89 Patentblatt 89/31**

(84) Benannte Vertragsstaaten:
**FR GB SE**

(56) Entgegenhaltungen:
**CH-A-624 808**
**DE-A-2 842 350**
**DE-B-2 362 328**

(73) Patentinhaber: **Siemens Aktiengesellschaft Berlin und München, Wittelsbacherplatz 2, D-8000 München 2 (DE)**

(72) Erfinder: **Birlmeier, Josef, Josef- Weigl- Strasse 20, D-8024 Deisenhofen (DE)**
Erfinder: **Eberlein, Klaus, Heiglstrasse 12, D-8190 Wolfratshausen (DE)**
Erfinder: **Nagler, Werner, Lipowskystrasse 8, D-8000 München 70 (DE)**

EP 0 091 614 B1

## Beschreibung

Die Erfindung betrifft eine Schaltungsanordnung für Fernmeldevermittlungsanlagen, insbesondere Fernsprechvermittlungsanlagen, mit einer Anzahl von Schalteinrichtungen, über die im Durchschnitt nur während eines Teiles der Gesamtheit ihrer jeweiligen Belegung Signale durch Anschaltung an eine Signalstromquelle mit einer hinsichtlich der Signalstrombelastung beschränkten Leistungsfähigkeit ausgesendet werden, und mit einer einer Verteilung der Belastung dienenden, in Form von Impulsfolgen mit jeweils gleichen Impulsabständen durchgeführten Signalgabe, bei der die Impulse von über verschiedene der Schalteinrichtungen zugleich ausgesendeten Impulsfolgen zeitlich unterschiedlichen Phasenlagen und dadurch eine zeitliche Versetzung von Schalteinrichtung zu Schalteinrichtung aufweisen, insbesondere eine Versetzung, durch die die Impulse von verschiedenen Impulsfolgen sich hinsichtlich Impulsende und Impulsbeginn zeitlich aneinander anschließen.

Eine Schaltungsanordnung dieser Art ist bereits durch die DE-A-2 842 350 bekannt. Darin wird beschrieben, daß eine zeitliche Staffelung der Signalgabe eine punktuelle Überlastung von Stromversorgungseinrichtungen zu vermeiden hilft. Dabei geht es um die Zählimpulsgabe. Diese Signalgabe tritt bei Zählimpulsgebern der Landesfernwahltechnik, für die die genannte Literaturstelle von besonderer Bedeutung ist, während der Dauer einer durchgeschalteten Gesprächsverbindung auf. Da der Verbindungsaufbau in der durchschnittlichen Gesamtdauer der Belegung eines Zählimpulsgebers nur einen relativ kleinen Bruchteil dieser Zeit ausmacht, und da Zählimpulsgeber relativ hoch belastete Schalteinrichtungen sind, kann man davon ausgehen, daß Zählimpulsgeber, die fast immer belegt sind, während jeder ihrer Belegungen die meiste Zeit eine Zählimpulsgabe zum Zähler des jeweils rufenden Teilnehmers durchführen. Deshalb ist in dem bekannten Falle vorgesehen, daß für Zählimpulse einer jeden Impulsfolgefrequenz mehrere Phasenlagen festgelegt sind, und daß die Impulse einer jeden dieser verschiedenen Phasenlagen jeweils über eine Leitung abgegeben werden. Es sind also so viele Leitungen vorgesehen, wie Phasenlagen für jeweils eine Impulsfolgefrequenz. Dadurch, daß jeder Zählimpulsgeber die meiste Zeit belegt ist und daß während der Dauer der Belegung eines Zählimpulsgebers der größte Anteil dieses Zeitraumes die Zählimpulsgabe stattfindet, ergibt sich eine relativ gleichmäßige Belastung einer die Zählimpulsgabe in den verschiedenen Phasen liefernden Stromquelle.

Im Unterschied zu dem bekannten Sachverhalt kann es auch Fälle geben, in denen eine solche statistische gleichmässige Verteilung und ein damit selbsttätig erreichter Belastungsausgleich nicht erzielt werden können. Wenn z. B. die Signalgabe nur einen relativ kurzen Zeitraum in der Gesamtdauer einer jeden Belegung einnimmt, stellt die Anzahl der Schalteinrichtungen, in denen impulseweise eine Signalgabe z. Z. stattfindet, nur einen relativ kleinen Anteil von der Gesamtheit dieser Schalteinrichtungen dar. Wenn die Signalgabe, wie z. B. bei der Rufstromaussendung, immer am Anfang der Belegung einer solchen Schalteinrichtung, z. B. einer ankommend belegten Teilnehmeranschlußschaltung, liegt, kann es durch eine zeitliche Häufung von Verbindungsherstellungsvorgängen zu bestimmten Teilnehmern dazu kommen, daß ein Belastungsausgleich aufgrund statistischer Verteilung nicht oder nicht in ausreichendem Maße zustande kommt, daß also eine Überlastung einer Signalstromquelle eintritt, was zur Folge haben kann, daß eine unzureichende Signalgabe, z. B. mit Unterspannung, stattfindet.

Für die Erfindung besteht die Aufgabe, unter anderen als durch obige Literaturstelle bekannten Voraussetzungen für eine gesicherte Signalgabe zu sorgen und zu verhindern, daß eine entsprechende Signalstromquelle überlastet werden kann.

Die Erfindung löst die gestellte Aufgabe dadurch, daß die Schalteinrichtungen zur Signalgabe, insbesondere zur Rufstromimpulsgabe, jeweils einer der Impulsfolgen, also einer Impulsfolge mit einer bestimmten Phasenlage zuteilbar sind, und daß diese Zuteilung unter Berücksichtigung bereits bestehender und Signalgabevorgänge bewirkender Zuteilungen wahlfrei durchführbar ist, indem jeder der Impulsfolgen mit jeweils einer bestimmten Phasenlage nicht mehr als eine durch die Belastbarkeit der Signalstromquelle vorgegebene Signalstrombelastung bedingte Anzahl von Schalteinrichtungen zugeteilt wird, und daß bei gegebener Zuteilung dieser Anzahl von Schalteinrichtungen in jeder der mehreren Phasenlagen weitere Schalteinrichtungen, die für eine Signalgabe eine Zuteilung zu einer Phasenlage anfordern, entweder ein Signal zum Abbruch der Verbindungsherstellung, insbesondere Besetztzeichen, erhalten, oder erst nach einer insbesondere begrenzten Verzugszeit jeweils einer solchen Phasenlage zugeteilt werden, in der die dieser zugeteilten Schalteinrichtung weniger geworden sind als die genannte Anzahl, und bei Begrenzung der Vorzugszeit das Signal zum Abbruch der Verbindungsherstellung erhalten.

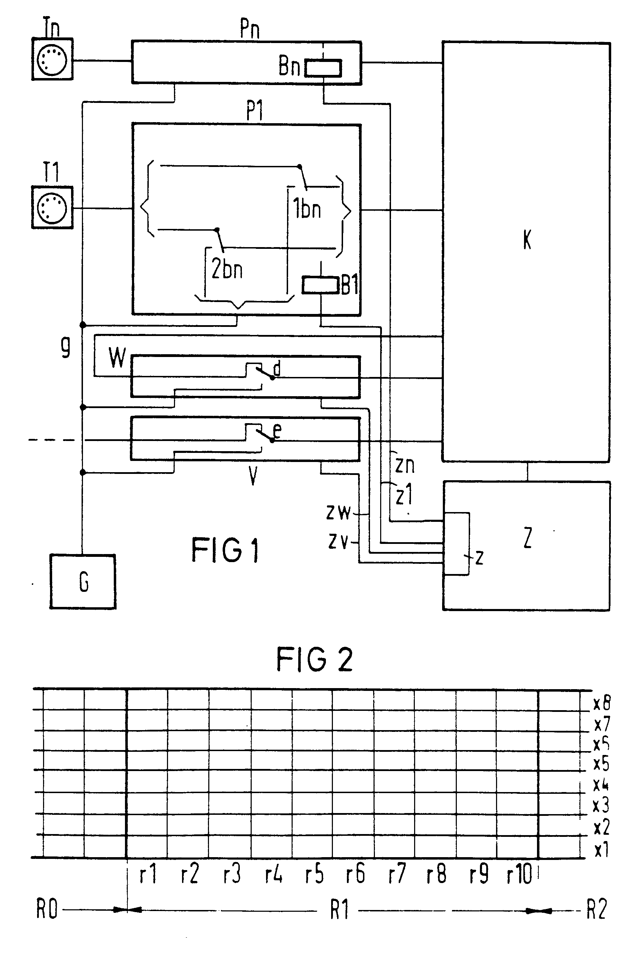

In den FIG 1, 2 und 3 der Zeichnung ist ein Ausführungsbeispiel der Erfindung nur in wesentlich zu ihrem Verständnis beitragenden Bestandteilen dargestellt.

In FIG 1 ist auszugsweise eine Fernsprechvermittlungsanlage dargestellt. An ein Koppelfeld K mit Umkehrgruppierung sind Teilnehmeranschlußschaltungen P1 bis Pn, Internverbindungssätze W und Externverbindungssätze V angeschlossen. Zur Abwicklung der Verbindungsherstellungsvorgänge dient ein Zentralsteuerwerk Z. Das hier dargestellte Steuerwerk kann auch ein dezentrales Steuerwerk sein; in diesem Fall arbeitet eine größere Anzahl dezentraler Steuerwerke mit einem gemeinsamen Zentralsteuerwerk in an sich bekannter Weise zusammen. Die Vorgänge der Verbindungsherstellung werden hier als bekannt vorausgesetzt und deshalb nicht im einzelnen beschrieben. Im vorliegenden Fall ist die technische Realisierung der Aussendung von Rufwechselstromimpulsen zu angewählten Teilnehmerstellen von vorrangiger Bedeutung. Solche Teilnehmerstellen sind in der Zeichnung mit T1 und Tn bezeichnet.

Für die Aussendung von Rufwechselstromimpulsen können als verbindungsindividuelle Schalteinrichtungen die Teilnehmeranschlußschaltungen P1 bis Pn dienen, ebenso aber auch - wie es von der konventionellen Fernsprechvermittlungstechnik her bekannt ist - verbindungsindividuelle Schalteinrichtungen, wie Internverbindungssätze W und Leitungsabschlußschaltungen V von ankommenden oder doppeltgerichteten Verbindungsleitungen.

Die vorliegende Beschreibung ist auf eine Fernsprechvermittlungsanlage mit einem reinen Raummultiplex-Koppelfeld K abgestützt. Ebensogut ist es aber auch möglich, die Erfindung in einer Zeitmultiplex-Vermittlungsanlage zu realisieren. Ebenso, wie es sich um eine Fernsprechvermittlungsanlage handeln kann, kann es sich auch um eine Fernschreibvermittlungsanlage oder um eine Vermittlungsanlage zur Herstellung von Verbindungen zur Datenübertragung handeln. Anstelle einer Aussendung von Rufwechselstromimpulsen kann auch eine Aussendung von Gebührenzählimpulsen, z. B. Gleichstromimpulsen, vorgesehen sein.

In der Teilnehmeranschlußschaltung P1 ist ein Rufanschalterrelais B1 dargestellt. Es steht mit dem Zentralsteuerwerk über eine individuelle Leitung in Verbindung. Den Teilnehmeranschlußschaltungen können aber auch dezentrale Steuereinrichtungen zugeordnet sein, die ihrerseits ihre Steuerinformationen vom Zentralsteuerwerk erhalten und die erforderlichen Steuerungsvorgänge gegenüber den ihnen gruppenweise zugeordneten Teilnehmeranschlußschaltungen ausführen. In der gleichen Weise ist auch in der Teilnehmeranschlußschaltung Pn ein Rufanschalterrelais Bn vorgesehen. Ebenfalls sind nicht gezeigte Rufanschalterelais in den Verbindungssätzen V und W vorgesehen.

Die Kontakte des Rufanschalterelais B1 in der Teilnehmeranschlußschaltung P1 sind die Umschaltekontakte 1bn und 2bn. Im Ruhezustand ist die betreffende Teilnehmerstation T1 innerhalb der Teilnehmeranschlußschaltung P1 mit einer zum Koppelfeld K weiterführenden zweiadrigen Anschlußleitung verbunden. Diese Verbindung kann über weitere Schaltmittel, wie z. B. Übertrager, verlaufen. Ferner können Schaltmittel zur Gleichstromspeisung der Teilnehmerstationen vorgesehen sein. Dies wird als bekannt vorausgesetzt.

Wird eine Teilnehmerstelle angerufen, z. B. Teilnehmerstelle T1, so wird in an sich bekannter Weise Rufwechselstrom impulsweise über die betreffende Teilnehmerleitung zu der angeschlossenen Teilnehmerstation ausgesendet. Hierzu dient das Rufanschalterelais B1. Anstelle eines elektromagnetischen Relais können auch entsprechende elektronische Schaltmittel vorgesehen sein. Es ist auch möglich, mehrere Teilnehmeranschlußschaltungen zu einer Mehrfachanschlußschaltung zu vereinigen, wie es z. B. in der DE-OS-2 826 113 (78 P 6109) für Zeitmultiplex-Fernsprechvermittlungsanlagen beschrieben ist.

Die Rufstromaussendung erfolgt in an sich bekannter Weise so, daß alsbald nach Vollendung einer Verbindungsherstellung über das Koppelfeld K und gegebenenfalls über Verbindungsleitungen ein erster Rufwechselstromimpuls zur angewählten Teilnehmerstation hin ausgesendet wird. Im vorliegenden Fall geschieht dies dadurch, daß die Kontakte 1bn und 2bn während der Dauer des Rufwechselstromimpulses aus ihrer dargestellten Ruhelage in ihre Arbeitslage gebracht werden. Dadurch wird die betreffende Teilnehmerstation während des Rufwechselstromimpulses mit einer gemeinsamen zweiadrigen Rufwechselstromleitung g verbunden, die an einen gemeinsamen Rufwechselstromgenerator G angeschlossen ist. Sobald sich der angerufene Teilnehmer meldet, wird die Aussendung von Rufwechselstromimpulsen zu seiner Teilnehmerstelle hin in bekannter Weise beendet.

Während der Gesamtdauer der Belegung einer Teilnehmeranschlußschaltung ist also nur während eines relativ kleinen Teils dieser Zeit, und zwar bis zum Melden des angerufenen Teilnehmers, eine impulsweise Rufstromaussendung vorgesehen. Die betreffende Signalstromquelle, im vorliegenden Falle also der Rufwechselstromgenerator G, ist mit einer Leistungsfähigkeit ausgestattet, die für alle normalerweise vorkommenden Betriebssituationen ausreicht, um parallel zu mehreren gleichzeitig zu rufenden Teilnehmerstellen Rufwechselstrom ausreichender Stromstärke aussenden zu können. Die Leistungsfähigkeit des Rufwechselstromgenerators G ist also beschränkt; sie reicht aus, um auch unter extremen Betriebsbedingungen den erforderlichen Rufwechselstrom liefern zu können.

Die Aussendung von Rufwechselstromimpulsen erfolgt nach einem ersten Rufwechselstromimpuls mit weiteren Rufwechselstromimpulsen, die mit gleichen zeitlichen Abständen aufeinander folgen. Die Dauer eines ersten Rufwechselstromimpulses möge 500 ms betragen, während die Dauer der weiteren Rufwechselstromimpulse jeweils eine Sekunde beträgt. Die zeitlichen Abstände zwischen zwei aufeinander folgenden weiteren Rufwechselstromimpulsen beträgt 10 s, gemessen jeweils von Impulsbeginn bis Impulsbeginn.

Zur Belastungsverteilung für den Rufwechselstromgenerator G ist vorgesehen, die verschiedenen Teilnehmeranschlußschaltungen und Verbindungssätze so zu steuern, daß die Rufwechselstromimpulsfolgen, die jeweils pro Verbindung gleiche Impulsabstände von Rufwechselstromimpuls zu Rufwechselstromimpuls aufweisen, mit zeitlich unterschiedlichen Phasenlagen zur Aussendung kommen. Dadurch ergibt sich eine zeitliche Versetzung von Teilnehmeranschlußschaltung zu Teilnehmeranschlußschaltung hinsichtlich der relativen Zeitlagen der ausgesendeten Rufstromimpulsfolgen. Entsprechendes gilt für die Verbindungssätze.

In FIG 2 ist die Aufteilung eines Rufzyklusses R1 in zehn Rufphasen r1 bis r10 angedeutet. Dem Rufzyklus R1 geht ein entsprechender Rufzyklus R0 voraus und ein entsprechender Rufzyklus R2 folgt ihm nach.

Erfindungsgemäß sind die Schalteinrichtungen zur Signalgabe (also die teilnehmerindividuellen Teilnehmeranschlußschaltungen sowie die verbindungsindividuellen Verbindungssätze) im Rufzustand zeitlagenmäßig jeweils einer der Impulsfolgen, also jeweils einer Impulsfolge mit einer bestimmten Phasenlage zuteilbar. Hierzu ist im Zentralsteuerwerk Z eine Zuteilungssteuereinrichtung z vorgesehen. Diese enthält einen Zuteilungsspeicher, der gemäß der Darstellung in FIG 2 aufgebaut ist. Dieser Speicher entspricht in seiner Größe jeweils einem Rufzyklus. Zehn Spalten in diesem Speicher sind den zehn Phasenlagen innerhalb eines Rufzyklusses zugeordnet. Jede dieser Spalten ist durch acht Zeilen in acht Teile unterteilt. In jedem Speicherteil der Spalte dieses Zuteilungsspeichers kann die Adresse jeweils einer der Einrichtungen zur Signalgabe eingeschrieben werden.

Wie sich nun anhand der Darstellung in FIG 2 zeigt, kann jeweils ein Rufwechselstromimpuls während jeder der zehn verschiedenen Phasenlagen zu acht verschiedenen Teilnehmerstellen hin ausgesendet werden. Selbstverständlich sind diese Zahlenangaben nur Beispiele, die für die Erfindung nicht bindend sind. Nach Vollendung einer Verbindungsherstellung bis zur Teilnehmeranschlußschaltung des jeweils angewählten Teilnehmers wird diese Teilnehmeranschlußschaltung als Schalteinrichtung zur Rufwechselstromimpuls-Signalgabe durch die Zuteilungssteuereinrichtung z des Zentralsteuerwerkes Z einer bestimmten Phasenlage zugeteilt. Die Zuteilung einer Schalteinrichtung zu einer Phasenlage hat zur Folge, daß die Adresse der betreffenden Schalteinrichtung in einen Speicherteil der der betreffenden Phasenlage entsprechenden Spalte des Zuteilungsspeichers eingeschrieben wird. Dieser Speicherteil der betreffenden Spalte des Zuteilungsspeichers entspricht einer der Zeilen x1 bis x8. Diese Zuteilung wird mit Hilfe der Zuteilungssteuereinrichtung z in der Weise vorgenommen, daß die betreffende Schalteinrichtung einer solchen Phasenlage zugeordnet wird, in deren Spalte im Zuteilungsspeicher wenigstens noch ein Speicherteil frei ist. Ist in einer Spalte kein Speicherteil mehr frei, so bedeutet dies, daß in der betreffenden Phasenlage die Normalbelastbarkeit der Rufstromquelle G bereits voll ausgeschöpft ist. Diese Zuordnung erfolgt also in der Weise, daß jeder der Impulsfolgen mit jeweils einer bestimmten Phasenlage nicht mehr als eine durch die Belastbarkeit der Signalstromquelle vorgegebene Signalstrombelastung bedingte Anzahl von Schalteinrichtungen zugeteilt wird.

Ebenfalls mittels der Zuteilungssteuereinrichtung z werden die verschiedenen Schalteinrichtungen mittels der in jeder der Spalten des Zuteilungsspeichers nach FIG 2 jeweils gespeicherten Adressen angesteuert. Zu Beginn einer Phasenlage erhalten alle Schalteinrichtungen, die betreffenden Phasenlagen zugeteilt sind, einen Befehl, durch den das jeweilige Rufanschalterelais in jeder dieser Schalteinrichtungen zum Ansprechen gebracht wird. Zu Ende dieser Phasenlage erhalten diese Schalteinrichtungen jeweils einen entgegengesetzten Befehl, durch den die betreffenden Rufanschalterelais wieder in ihre Ruhelage zurückversetzt werden. Da unverzüglich mit Ende einer Phasenlage die nächste Phasenlage beginnt, werden unverzüglich anschließend die Rufanschalterelais in allen denjenigen Schalteinrichtungen betätigt, die dieser nächsten Phasenlage zugeteilt sind. Zu Ende dieser nächsten Phasenlage werden auch die betreffenden Rufanschalterelais wieder in ihre Ruhelage zurückversetzt. Ist der Zeitraum der letzten Phasenlage eines Rufzyklusses abgelaufen, so beginnt ein nächster Rufzyklus mit seiner ersten Phasenlage. In dieser Weise werden Rufwechselstromimpulse in zeitlicher Staffelung über die verschiedenen Schalteinrichtungen zur Aussendung gebracht.

Außer diesen Rufwechselstromimpulsen einer jeweils kontinuierlichen Rufwechselstromimpulsfolge wird noch davor, und zwar alsbald nach einem jeden Verbindungsaufbau, jeweils ein erster Rufwechselstromimpuls zur Aussendung gebracht. Dieser erste Rufwechselstromimpuls ist also unabhängig von dem gemäß FIG 2 vorgegebenen Zeitraster. Die Leistungsfähigkeit des Rufwechselstromgenerators G ist so ausgelegt, daß hinausgehend über die genannte Normalbelastbarkeit eine Spitzenbelastbarkeit festgelegt ist. Die Differenz zwischen Spitzenbelastbarkeit und Normalbelastbarkeit ist so gewählt, daß dieser Leistungsüberschuß zur Durchführung der Aussendung von ersten Rufwechselstromimpulsen ausreicht.

Für die Abwicklung der Zuteilung der Schalteinrichtungen jeweils zu einer Phasenlage durch die Zuteilungssteuereinrichtung z kann in dieser vorgesehen werden, daß die Anzahl von Schalteinrichtungen, die jeweils einer Impulsfolge mit einer Phasenlage zugeteilt sind, höchstens um eins differiert bezüglich der verschiedenen Impulsfolgen mit unterschiedlichen Phasenlagen. Bei jedem solchen Zuteilungsvorgang erfolgt also die Zuteilung immer zu einer Phasenlage, der jeweils die kleinste Zahl von Schalteinrichtungen zur Zeit zugeteilt ist. Dadurch wird erreicht, daß die Anzahl von Schalteinrichtungen pro Phasenlage von Phasenlage zu Phasenlage möglichst gleich ist. Dadurch wird eine möglichst gleichmäßige Strombelastung für den Rufwechselstromgenerator G erzielt.

Darüber hinaus kann vorgesehen werden, eine Schalteinrichtung einer einer Phasenlage entsprechenden Impulsfolge in der Weise unter Berücksichtigung der Strombelastbarkeit der Signalstromquelle zuzuteilen, daß der auf einen ersten Rufstromimpuls nächstfolgende Rufwechselstromimpuls, also der erste der weiteren Rufwechselstromimpulse, einen solchen zeitlichen Abstand von dem ersten Rufstromimpuls hat, daß dieser Abstand nicht größer als die zeitlichen Abstände zwischen den weiteren Rufwechselstromimpulsen ist, zugleich aber so weit wie möglich in seiner zeitlichen Dauer dem Abstand zwischen den weiteren Rufwechselstromimpulsen angenähert ist. Hierfür bietet die zuvor angesprochene gleichmäßige Verteilung der Schalteinrichtungen auf die verschiedenen Rufwechselstromimpuls-Phasenlagen eine günstige Voraussetzung.

Die verschiedenen Schalteinrichtungen sind über individuelle Leitungen $z1$, $zn$, $zv$, $zw$ mit der Zuteilungssteuereinrichtung $z$ des Zentralsteuerwerkes $Z$ bzw. mit einem entsprechenden dezentralen Steuerwerk verbunden. Es ist jedoch auch möglich, in jeder der Schalteinrichtungen Speichermittel zur Speicherung der Phasenlage, der eine Schalteinrichtung jeweils zugeteilt wird, vorzusehen. In diesem Falle kann die Vielzahl der Leitungen $z1$ bis $zw$ eingespart werden. In diesem Falle wird also die die jeweilige Zuteilung einer Schalteinrichtung zu einer Phasenlage angebende Information völlig dezentral in jeder der betreffenden Schalteinrichtungen niedergelegt. Die Schalteinrichtungen werden in diesem Falle mit einem gemeinsamen Takt angesteuert. Jede der Schalteinrichtungen nimmt dann unter dem Einfluß dieses Taktes anhand der gespeicherten Information über die Zuteilung die Anschaltung der betreffenden Teilnehmerstation an den Rufwechselstromgenerator vor.

Es sei auch noch darauf hingewiesen, daß anstelle von Rufwechselstromimpulsen auch Impulsfolgen anderer Art und Impulsfolgen für andere Zwecke zur Aussendung gebracht werden können.

Sind im Zuteilungsspeicher alle Speicherteile in allen Spalten bereits belegt, sind also jeder Rufphase bereits je acht Schalteinrichtungen zugeteilt, und wird eine weitere Verbindung hergestellt, so findet das Zentralsteuerwerk keinen freien Speicherteil in den verschiedenen Spalten des Zuteilungsspeichers mehr vor. Die Grenze der Belastbarkeit des Rufwechselstromgenerators ist also erreicht. In diesem Falle können zu der angewählten Teilnehmerstelle zur Zeit keine Rufwechselstromimpulse ausgesendet werden. Deshalb wird die betreffende Schalteinrichtung in den Besetztzustand geschaltet und an den betreffenden rufenden Teilnehmer wird Besetztzeichen ausgesendet.

In Abweichung hiervor sieht eine andere Ausführungsvariante vor, daß in dem zuvor angesprochenen Betriebsfall die betreffende Schalteinrichtung dann, wenn das Zentralsteuerwerk $Z$ keinen freien Speicherteil in den verschiedenen Spalten des Zuteilungsspeichers nach Herstellung einer Verbindung über diese Schalteinrichtung, z. B. eine Teilnehmeranschlußschaltung, zu einem Teilnehmer mehr auffindet, diese Schalteinrichtung erst nach einer bestimmten Verzugszeit (Rufverzug) jeweils einer Phasenlage zuzuteilen. Diese Verzugszeit kann mit Hilfe von zeitabmessenden Schaltmitteln begrenzt sein, was anschließend noch näher erläutert wird. Diese Zuteilung erfolgt dann jeweils zu einer solchen Phasenlage, in der die dieser Phasenlage zugeteilten Schalteinrichtungen zahlenmäßig weniger geworden sind als die durch die Maximalbelastbarkeit des Rufstromgenerators bedingte Anzahl von Schalteinrichtungen, über die jeweils gleichzeitig Rufsignale ausgesendet werden dürfen.

Es ist möglich, diese Rufverzugszeit unbegrenzt zu lassen. Das bedeutet, daß ein rufender Teilnehmer, der einen anderen Teilnehmer angewählt hat, in dem Betriebsfall, daß nach dem Verbindungsaufbau nicht sofort, d.h. zunächst nicht Rufsignal ausgesendet werden kann, auf den Beginn der Rufsignalaussendung nicht nur warten kann, sondern daß er solange und zwar beliebig lange warten kann, wenn der Rufverzug entsprechend lange dauert. In diesem Fall würde das Zentralsteuerwerk immer wieder erneut von der betreffenden Teilnehmeranschlußschaltung des angewählten Teilnehmers angeregt werden, mit der Rufsignalaussendung zu beginnen. Dies würde sich solange wiederholen, bis eine Zuteilung und Rufsignalaussendung über diese Teilnehmeranschlußschaltung in der oben beschriebenen Weise möglich geworden ist.

Es besteht aber auch die Möglichkeit, die genannte Rufverzugszeit zu begrenzen. Für diesen Fall ist vorgesehen, den Zuteilungsspeicher um z. B. zwei Speicherzeilen zu vergrößern, die als Wartespeicherzeilen bezeichnet werden. Ist nun bei Anwahl eines Teilnehmers in keiner der Speicherzeilen $x1$ bis $x8$ mehr ein Speicherplatz mehr frei, also in keiner der den Phasenlagen zugeordneten Spalten des Zuteilungsspeichers nach FIG 2, so wird die Adresse der angewählten Teilnehmeranschlußschaltung an einem Wartespeicherplatz in einer der genannten beiden Wartespeicherzeilen und in Zuordnung zu einer der Phasenlagen, also in einer der Spalten des Zuteilungsspeichers, gespeichert, und zwar zusammen mit einem summarischen Zeitwert. Dieser möge sich aus dem Speicherungszeitwert plus einem durch eine festgelegte maximale Rufverzugszeit bestimmten Verzugszeitwert additiv ergeben.

Diese Speicherung erfolgt vorzugsweise in derjenigen Spalte des Zuteilungsspeichers, die der Rufphase entspricht, die dem gegebenen Zeitpumkt der Speicherung als nächste Rufphase folgt. Ist in der betreffenden Spalte des Zuteilungsspeichers kein Wartespeicherplatz mehr frei, so erfolgt eine Speicherung in derjenigen Spalte des Zuteilungsspeichers, in der ein Wartespeicherplatz frei ist und die der zuvor genannten Spalte am nächsten ist.

Wird nun die regelmäßige Rufstromimpulsaussendung in der weiter oben beschriebenen Weise abgewickelt, indem die Zuteilungsschalteinrichtung z des Zentralsteuerwerkes Z nacheinander die Adressen jeweils einer Spalte des Zuteilungsspeichers ausliest und die Einschaltung der jeweiligen Rufstromimpulsstromwege, z. B. über die Kontakte 1bn und 2bn, bewerkstelligt, so gelangt sie schließlich auch in der betreffenden Spalte des Zuteilungsspeichers zu den den Wartespeicherzeilen angehörenden Speicherplätzen. Beim Auslesen der übrigen Speicherplätze hat die Zuteilungssteuereinrichtung bereits festgestellt, ob an allen Speicherplätzen noch Adressen von Schalteinrichtungen gespeichert sind.

Falls ein Speicherplatz freigeworden ist inzwischen, nimmt die Zuteilungssteuereinrichtung eine Umspeicherung einer Adresse aus einem Wartespeicherplatz an den inzwischen frei gewordenen Speicherplatz vor, wobei die Adresse aus demjenigen Wartespeicherplatz mit dem höheren summarischen Zeitwert umgespeichert wird, weil für die dieser Adresse entsprechende angewählte Teilnehmeranschlußschaltung bereits die meiste Rufverzugszeit verstrichen ist. Sind in dieser Weise zwei Speicherplätze in einer Spalte des Zuteilungsspeichers inzwischen frei geworden, so können zwei solche Umspeichervorgänge durchgeführt werden. Bei einer Umspeicherung wird der gespeicherte Zeitwert gelöscht. Die den umgespeicherten Adressen entsprechenden Teilnehmeranschlußschaltungen nehmen von diesem Zeitpunkt an an den Schaltvorgängen der Rufstromimpulsaussendung teil. Der jeweils erste Rufstromimpuls wird in Zusammenhang mit der Umspeicherung zur Aussendung gebracht.

Ist im Zeitraum eines Rufzyklusses in einer Spalte des Zuteilungsspeichers, in der alle Speicherplätze mit Adressen belegt sind, kein Speicherplatz frei geworden aufgrund des Meldens eines der angerufenen Teilnehmer, so kann keine Umspeicherung erfolgen. Die Zuteilungssteuereinrichtung liest dann aus den Wartespeicherplätzen der betreffenden Spalte des Zuteilungsspeichers jeweils den summarischen Zeitwert aus und vergleicht jeden der beiden mit einem Ist-Zeitwert, den sie einem nicht gezeigten Ist-Zeitwert-Geber entnimmt. Ist der Ist-Zeitwert höher als der gespeicherte summarische Zeitwert, so wird die jeweilige Adresse der betreffenden angewählten Teilnehmeranschlußschaltung aus dem entsprechenden Wartespeicherplatz gelöscht und in dieser Teilnehmeranschlußschaltung wird der Besetztzustand in der oben beschriebenen Weise durch das Zentralsteuerwerk eingeschaltet. Anderenfalls bleibt die betreffende Adresse in diesem Wartespeicherplatz für die Dauer eines weiteren Rufzyklusses bestehen.

Durch eine Festlegung eines maximalen Rufverzugszeitwertes kann also erreicht werden, daß Teilnehmer bei Anwahl eines anderen Teilnehmers eine bestimmte Zeit (Rufverzugszeit) notwendigenfalls warten können, daß sie aber bei erfolglosem Verstreichen dieser Zeit Besetztton erhalten. Eine Anschaltung von Besetztton durch das Zentralsteuerwerk erfolgt in an sich bekannter und deshalb hier nicht im einzelnen beschriebener Weise.

Meldet sich ein angerufener Teilnehmer, so wird die Rufwechselstromimpulsaussendung in bekannter Weise sofort beendet. Zugleich wird ein entsprechender Befehl zur Zuteilungssteuereinrichtung z gegeben, der diese veranlaßt, daß im Zuteilungsspeicher die Adresse des betreffenden Teilnehmeranschlusses der Teilnehmerstelle dieses Teilnehmers sofort gelöscht wird. Dadurch wird die Aussendung weiterer Rufwechselstromimpulse zu dieser Teilnehmerstelle hin unterbunden. In dem Zuteilungsspeicher können in den frei gewordenen Speicherplätzen wieder Adressen von Schalteinrichtungen, z. B. von Teilnehmeranschlußschaltungen, in Zusammenhang mit neuen Zuteilungsschaltvorgängen in der weiter oben beschriebenen Weise eingeschrieben werden.

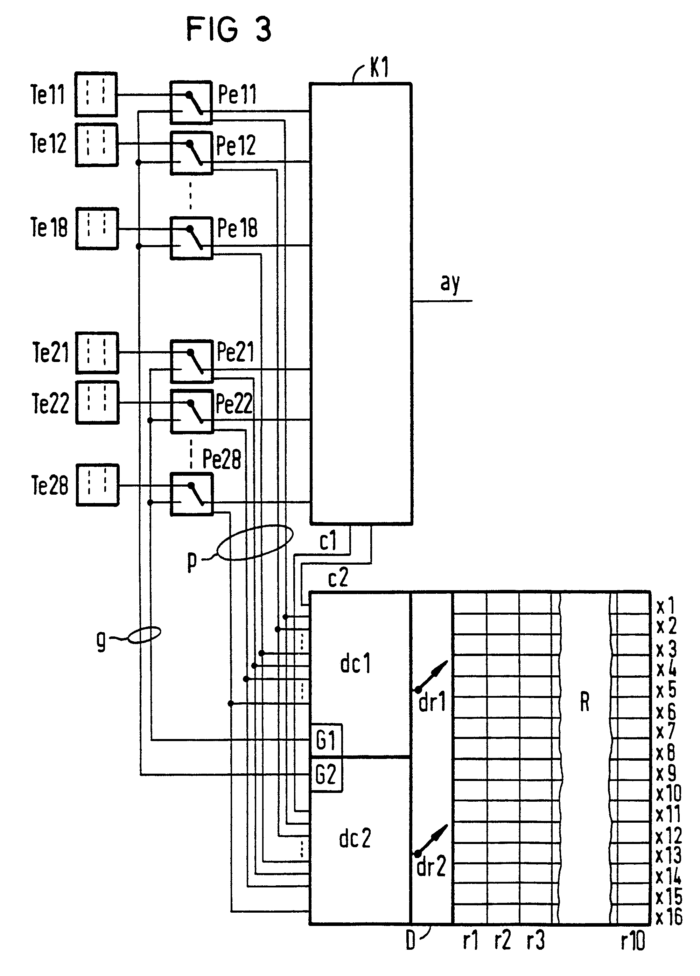

In FIG 3 der Zeichnung findet sich ein weiteres Ausführungsbeispiel der Erfindung, das einen Konzentrator darstellt. Dieser möge eine Koppeleinrichtung K1 enthalten, die über ein Leitungsbündel oder eine mehrkanälige Leitung ay mit dem in FIG 1 dargestellten Koppelfeld K verbunden sein möge. Die Koppeleinrichtung K1 kann ebenso wie das Koppelfeld K für eine Verbindungsherstellung in Zeitmultiplextechnik eingerichtet sein.

Der Konzentrator nach FIG 3 enthält unter anderem auch eine Konzentratorsteuerung D. Sie enthält unter anderem zwei Prozessoren dc1 und dc2. Diese arbeiten unabhängig voneinander. Ihnen gemeinsam ist ein Zuteilungsspeicher R vorgesehen, der in Anlehnung an FIG 2 zu verstehen ist. Jeder der beiden Prozessoren führt Verbindungsdurchschaltungen innerhalb der Koppeleinrichtung K1 durch. Hierzu dienen die beiden Steuerleitungen c1 und c2. Jeder der beiden Prozessoren steht mit dem Zentralsteuerwerk Z in FIG 1 über einen eigenen Steuerkanal in Verbindung.

Es sind zwei Gruppen von Teilnehmerstellen vorgesehen, Te11 bis Te18 und Te21 bis Te28. Jede Gruppe umfaßt acht Teilnehmerstellen. Die Anzahl von Teilnehmerstellen pro Gruppe und die Anzahl von Gruppen von Teilnehmerstellen können auch anders gewählt werden.

Die beiden Prozessoren dc1 und dc2 sind individuell den Gruppen von Teilnehmerstellen zugeordnet. Bei den Teilnehmerstellen handelt es sich um Tastaturwahlteilnehmerstellen; ebenso gut können aber auch konventionelle Nummernscheiben-Teilnehmerstellen vorgesehen werden. Jeder Prozessor bedient die Teilnehmerstellen der jeweils ihm zugeordneten Gruppe von Teilnehmerstellen. Dies betrifft die abgehende Verbindungsherstellung. Für die Zusammenarbeit zwischen den Teilnehmeranschlußschaltungen Pe11 bis Pe18 und Pe21 bis Pe28 sind Steuerstrompfade pro Teilnehmeranschlußschaltung vorgesehen, die summarisch mit p bezeichnet sind. Wie aus diesen hervorgeht, stehen sämtliche Teilnehmeranschlußschaltungen mit jedem der beiden Prozessoren in Verbindung. Aushilfsweise kann jeder der beiden Prozessoren sämtliche Teilnehmeranschlußschaltungen bedienen. Dies betrifft die am sich bekannten Steuerungsvorgänge, die die Prozessoren für die Teilnehmeranschlußschaltungen durchführen.

In jeder der Teilnehmeranschlußschaltungen ist je ein Umschaltekontakt dargestellt, der nicht im einzelnen bezeichnet ist. Hierbei handelt es sich um einen Umschaltekontakt zur Rufstromimpulsaussendung entsprechend den Kontakten 1bn und 2bn in der Teilnehmeranschlußschaltung P1 in FIG 1. Es ist jeweils nur ein einziger Kontakt in FIG 3 pro Teilnehmeranschlußschaltung dargestellt, um die zeichnerische Darstellung zu vereinfachen. Aufbau und Arbeitsweise von Konzentratoren werden hier als bekannt vorausgesetzt und deshalb nicht weiter im einzelnen beschrieben. Im erfindungsgemäßen Zusammenhang ist von besonderer Bedeutung die Abwicklung der Rufstromimpulsaussendung.

Den beiden Prozessoren dc1 und dc2 sind individuell Rufstromgeneratoren G1 und G2 zugeordnet. Jeder der beiden Rufstromgeneratoren ist jeweils einer Gruppe von Teilnehmern individuell zugeordnet, wie die der Rufstromaussendung dienenden beiden Rufstromleitungen erkennen lassen, die summarisch mit g bezeichnet sind. Hinsichtlich der Leistungsfähigkeit ist jeder der beiden Rufstromgeneratoren so dimensioniert, daß diese Leistungsfähigkeit ausreicht für im normalen Verkehr gleichzeitig durchzuführende Vorgänge der Rufstromimpulsaussendung. Es sei davon ausgegangen, daß bei normalem Spitzenverkehr in jeder der insgesamt zehn Rufphasen gleichzeitig über sechs Teilnehmeranschlußschaltungen einer Teilnehmergruppe Rufstromimpulse zur Aussendung gebracht werden müssen. In Abweichung von der bisherigen Beschreibung sei von hier an angenommen, daß jede der Teilnehmergruppen je 600 Teilnehmerstellen mit 600 zugeordneten Teilnehmeranschlußschaltungen umfasse.

Da nun die beiden Prozessoren völlig unabhängig voneinander arbeiten und da jeder derselben Anrufe zu Teilnehmerstellen jeder der beiden Teilnehmergruppen durchzuschalten vermag, und da jeder auch die Rufstromaussendung zu jeder jeweils unter seinem Steuerungseinfluß angerufenen Teilnehmerstelle steuert, und da ein Rufstromgenerator für sechs gleichzeitig stattfindende Rufstromaussendungsvorgänge in jeder der zehn Rufphasen dimensioniert ist, ist festgelegt, daß jeder der beiden Prozessoren dc1 und dc2 in jeder der Rufphasen gleichzeitig nur bei drei Teilnehmeranschlußschaltungen die Rufstromaussendung bewerkstelligen darf. Da nämlich beide Prozessoren im Extremfall gleichzeitig in ein und derselben Teilnehmergruppe je drei Rufvorgänge in einer Rufphase abwickeln können, können es also insgesamt sechs Rufvorgänge sein, die jeweils einen Rufstromgenerator belasten, womit dessen maximale Leistungsfähigkeit (abgesehen vom ersten Rufstromimpuls, siehe oben!) ausgeschöpft ist.

Mit der zuvor erläuterten Festlegung wird die maximale Leistungsfähigkeit jedes der beiden Rufstromgeneratoren unter dem besonderen Aspekt extrem einseitiger Verkehrsbelastung hinsichtlich der beiden Teilnehmergruppen und hinsichtlich ankommender Anrufe berücksichtigt. Im Normalfall aber ist mit einer mehr ausgewogenen Verkehrsbelastung zu rechnen. Das bedeutet, daß jeder der beiden Prozessoren in der Regel ankommende Verbindungen in jeder der beiden Teilnehmergruppen steuert, also u.a. auch entsprechende Rufstromimpulssendevorgänge. Da deren Anzahl pro Prozessor durch die obige Festlegung auf drei begrenzt ist, wären im Normalfall die Rufgeneratoren generell unterbelastet, also völlig unzureichend ausgenutzt. Um nun einem solchen Nachteil zu begegnen, sind verschiedene Ausführungsvarianten vorgesehen, deren Verständnis die Kenntnis des Aufbaues des Zuteilungsspeichers R und seiner Zusammenarbeit mit den Prozessoren dc1 und dc2 voraussetzen.

Im Zuteilungsspeicher R sind zehn Spalten r1 bis r10 und 16 Zeilen x1 bis x16, also insgesamt 160 Speicherplätze vorgesehen, von denen jeder durch eine Zeilenbezeichnung und durch eine Spaltenbezeichnung definiert ist. Die oberen 8 Zeilen x1 bis x8 seien dem Prozessor dc1 und die unteren 8 Zeilen x9 bis x16 seien dem Prozessor dc2 zugeordnet; die Zählweise der Zeilen ist also umgekehrt zu der in FIG 2. - Jedem Prozessor, z. B. dc1, ist eine Zugriffseinrichtung, z. B. dr1, zugeordnet. Mit Hilfe seiner Zugriffseinrichtung führt jeder der beiden Prozessoren die Schreibvorgänge und die Lesevorgänge im Zuteilungsspeicher R durch.

Mit Hilfe der zuletzt erwähnten Zugriffseinrichtungen dr1 und dr2 ist es nun möglich, an den Speicherplätzen des Zuteilungsspeichers R Adressen von Teilnehmeranschlußschaltungen Pe1 bis Pe28 zu speichern, die einer Aussendung von Rufstromimpulsfolgen mittels der dargestellten Umschaltekontakte in der gleichen Weise dienen, wie es anhand der Anordnung nach FIG 1 im einzelnen beschrieben wurde. Bei diesen Teilnehmeranschlußschaltungen handelt es sich also ebenfalls um Schalteinrichtungen, über die im Durchschnitt nur während eines Teiles der Gesamtheit ihrer jeweiligen Belegung Signale in Form von Rufwechselstromimpulsen durch Anschaltung an eine Signalstromquelle (Rufstromgenerator) mit einer hinsichtlich der Signalstrombelastung beschränkten Leistungsfähigkeit ausgesendet werden. Hierbei erfolgt die Signalgabe ebenfalls zwecks Verteilung der Belastung in Form von Impulsfolgen mit jeweils gleichen Impulsabständen, wobei die Impulse von über verschiedene Teilnehmeranschlußschaltungen zugleich ausgesendeten Impulsfolgen zeitlich unterschiedliche Phasenlagen und dadurch eine zeitliche Versetzung von Teilnehmeranschlußschaltung zu Teilnehmeranschlußschaltung aufweisen, und zwar eine Versetzung, durch die die Impulse von verschiedenen Impulsfolgen hinsichtlich Impulsende und Impulsbeginn zeitlich aneinander anschließen. Ferner sind auch im Falle der Schaltungsanordnung nach FIG 3 die Teilnehmeranschlußschaltungen jeweils einer der genannten Impulsfolgen, also einer Impulsfolge mit einer bestimmten Phasenlage zuteilbar. Dies geschieht durch Einspeicherung der Adresse der jeweils betreffenden Teilnehmeranschlußschaltung in einen Speicherplatz einer ganz bestimmten Spalte des Zuteilungsspeichers R. Diese Zuteilung, d.h. also diese Einspeicherung erfolgt unter Berücksichtigung bereits bestehender Zuteilungen, also Einspeicherungen von Adressen von Teilnehmeranschlußschaltungen, mit deren Hilfe die Rufstromaussendung über die jeweils betreffende Teilnehmeranschlußschaltung erfolgt.

Im Zuteilungsspeicher R in FIG 3 sind die oberen acht Zeilen dem Prozessor dc1 und die unteren acht Zeilen dem Prozessor dc2 zugeordnet. Bei der Speicherung von Adressen von Teilnehmeranschlußschaltungen durch den Prozessor dc1 mit Hilfe seiner Zugriffseinrichtung dr1 sucht diese nach freien Speicherplätzen in der jeweils betreffenden Spalte in der Reihenfolge der Bezeichnung der Zeilen, also immer ausgehend vom obersten Speicherplatz, der der Zeile x1 angehört. Bei der Speicherung von Adressen durch den Prozessor dc2 mit Hilfe von dessen Zugriffseinrichtung dr2 sucht diese nach freien Speicherplätzen in der jeweils betreffenden Spalte entgegen der Reihenfolge der Bezeichnung der Zeilen, also immer ausgehend vom untersten Speicherplatz, der der Zeile x16 angehört.

Es ist nun vorgesehen, daß jeder der Impulsfolgen mit jeweils einer bestimmten Phasenlage nicht mehr als eine durch die Belastbarkeit des Rufstromgenerators vorgegebene Rufstrombelastung bedingte Anzahl von Teilnehmeranschlußschaltungen zugeteilt wird. Die Rufstrombelastbarkeit jedes Rufstromgenerators möge nun so bemessen sein, daß jeder der beiden Rufstromgeneratoren G1 und G2 gleichzeitig Rufstromimpulse zu sechs verschiedenen Teilnehmerstellen hin auszusenden erlaubt. Darüberhinaus hat jeder der beiden Rufstromgeneratoren noch eine Leistungsreserve, die für eine Aussendung von jeweils einem ersten Rufstromimpuls nach Herstellung einer Verbindung vorgesehen ist. Diese ersten Rufstromimpulse sind also zeitlich durch den Zeitpunkt der Herstellung einer Verbindung bestimmt und liegen in der Regel außerhalb der Phasenlage der anschließenden weiteren Rufstomimpulse.

Da nun jeder der beiden Prozessoren Verbindungen zu rufenden Teilnehmern in jeder der beiden Teilnehmergruppen Te11 bis Te18 und Te21 bis Te28 hinsichtlich aller dabei durchzuführenden Schaltvorgänge steuert, also auch hinsichtlich der Rufstromimpulsgabe, da es also sein kann, daß beide Prozessoren zufällig gleichzeitig alle im Aufbau befindlichen ankommenden Verbindungen innerhalb ein und derselben Teilnehmergruppe aufbauen und da jeder der beiden Rufstromgeneratoren jeweils einer der beiden Teilnehmergruppen zugeordnet ist (siehe die beiden separaten Rufstromleitungen g), ist gemäß einer ersten Ausführungsvariante der Anordnung nach FIG 3 vorgesehen, daß jeder der beiden Prozessoren in jeder der zehn Phasenlagen nur je drei Rufstromimpulse absetzten kann, d.h. jeder der beiden Prozessoren kann jeder der Impulsfolgen mit jeweils einer bestimmten Phasenlage nicht mehr als drei Teilnehmeranschlußschaltungen zuteilen. Der Prozessor dc1 kann mit seiner Zugriffseinrichtung dr1 also Adressen in jeder der Spalten des Zuteilungsspeichers R nur jeweils in die obersten drei Speicherplätze einschreiben, also in die Speicherplätze, die in den Zeilen x1 bis x3 liegen. Entsprechendes gilt für den Prozessor dc2. Sind in allen Spalten des Zuteilungsspeichers R jeweils drei Adressen von Teilnehmeranschlußschaltungen gespeichert, und sind ankommende Verbindugen zu zu rufenden Teilnehmerstellen darüberhinaus noch herzustellen, wozu ja auch die Rufstromimpulsgabe gehört, so werden diese weiteren im Aufbau befindlichen Verbindungen entweder auf besetzt geschaltet, wobei Besetztzeichen zum rufenden Teilnehmer hin ausgesendet wird, oder in der bereits anhand von FIG 1 beschriebenen Weise werden Teilnehmeranschlußschaltungen jeweils einer Impulsfolge mit einer bestimmten Phasenlage zugeteilt, wobei außer der Adresse der jeweils betreffenden Teilnehmeranschlußschaltung die bereits erläuterte summarische Zeitangabe zusammen mit der Adresse an den betreffenden Speicherplatz gespeichert wird. Hierzu können die Speicherplätze in den Zeilen x4 bis x8 bzw. x13 bis x9 verwendet werden.

Gemäß einer zweiten Ausführungsvariante der Schaltungsanordnung nach FIG 3 ist vorgesehen, daß jeder der Rufstromgeneratoren ein eine Überlastung anzeigendes Signal abzugeben vermag. Dieses Überlastsignal wird jedem der beiden Prozessoren zugeführt und für eine vorgegebene Sicherheitszeit von z. B. 10 s innerhalb jedes der beiden Prozessoren gespeichert. Gemäß dieser zweiten Ausführungsvariante ist nun vorgesehen, daß jeder der beiden Prozessoren gleichzeitig fünf Rufstromimpulse pro Phase absetzen kann, und daß bei Vorliegen des Überlastsignals jeder der beiden Prozessoren nur drei Rufstromimpulse pro Phase absetzen kann. Auf diese Weise ist es möglich, Überlastspitzen für jeden der beiden Rufstromgeneratoren zu vermeiden.

Gemäß einer dritten Ausführungsvariante der Anordnung nach FIG 3 ist vorgesehen, daß jeder der beiden Prozessoren die Adressen der Teilnehmeranschlußschaltungen jeweils in zwei verschiedenen Speicherbereichen speichert. So möge der Prozessor dc1 die Adressen der Teilnehmeranschlußschaltungen der Teilnehmergruppe Te11 bis Te18 in den Speicherplätzen in den Zeilen x1 bis x3 des Zuteilungsspeichers R speichern und die Adressen der Teilnehmeranschlußschaltungen der Teilnehmergruppe Te21 bis Te28 an den Speicherplätzen in den Zeilen x4 bis x6. Entsprechendes gilt für den Prozessor dc2. Jeder der beiden Prozessoren kann gemäß dieser dritten Ausführungsvariante also in jeder der beiden Teilnehmergruppen je drei Rufstromimpulse gleichzeitig pro Phase absetzen.

Gemäß einer vierten Ausführungsvariante der Anordnung nach FIG 3 ist vorgesehen, daß im Zuteilungsspeicher R die obersten sechs Zeilen x1 bis x6 dem Rufstromgenerator G1 und die untersten sechs Zeilen x16 bis x11 dem Rufstromgenerator G2 zugeordnet sind. Im Falle dieser Ausführungsvariante ist es den beiden Zugriffseinrichtungen dr1 und dr2 ermöglicht, in sämtlichen Zeilen des Zuteilungsspeichers Einspeicherungsvorgänge vorzunehmen. Dabei erfolgt die Einspeicherung so, daß z. B. der Prozessor dc1 mit seiner Zugriffseinrichtung dr1 Einspeicherungsvorgänge in den oberen sechs Zeilen vornimmt, wenn es sich hierbei um Adressen der Teilnehmeranschlußschaltungen Pe21 bis Pe28 handelt; er führt seine Einspeicherungsvorgänge in den untersten sechs Zeilen des Zuordnungsspeichers aus, sofern es sich hierbei um Adressen von Teilnehmeranschlußschaltungen Pe11 bis Pe18 handelt. Somit können für jede Gruppe von Teilnehmern je sechs gleichzeitige Rufstromimpulse pro Phasenlage abgesetzt werden.

Eine fünfte Ausführungsvariante der Anordnung nach FIG 3 geht von der oben beschriebenen dritten Ausführungsvariante aus. Gemäß dieser fünften Ausführungsvariante ist vorsehen, daß ein Prozessor, z. B. dc1, für den einen Rufgenerator, z. B. G1 gleichzeitig fünf Rufstromimpulse pro Phase zur Aussendung bringen kann, dagegen für den anderen Rufstromgenerator, z. B. G2, nur drei Rufstromimpulse pro Phase. Entsprechendes gilt umgekehrt für den anderen Prozessor. Durch diese gewisse Unsymmetrie hinsichtlich der Inanspruchnahme jedes der beiden Rufgeneratoren durch jeden der beiden Prozessoren kann die Ausnutzung der Leistungsfähigkeit der beiden Rufstromgeneratoren noch gesteigert werden, wobei die Gefahr einer relativ selten zu erwartenden Überlastung in Kauf genommen wird; eine solche Überlastung kommt also mit einem hohen Wahrscheinlichkeitsgrad nur relativ selten zustande. Diese Ausführungsvariante läßt sich in vorteilhafter Weise mit der oben beschriebenen zweiten Ausführungsvariante kombinieren.

Abschließend sei noch zur Ergänzung der Beschreibung sowohl zu der Anordnung nach FIG 2 als auch zu der Anordnung nach Fig 3 auf eine vorteilhafte Alternativmöglichkeit hinsichtlich der Umspeicherung von Adressen von Schalteinrichtungen, z. B. Teilnehmeranschlußschaltungen, von einem Wartespeicherplatz auf einen Speicherplatz des Zuteilungsspeichers hingewiesen. Weiter oben wurde hierzu beschrieben, daß eine solche Umspeicherung immer nur innerhalb einer Spalte des Zuteilungsspeichers erfolge, also nur unter Beibehaltung der Zuordnung zu einer einmal gewählten Phasenlage. Abweichend hiervon ist es aber durchaus auch möglich, eine an einem Wartespeicherplatz einer bestimmten Phasenlage gespeicherte Adresse bei Freiwerden eines Speicherplatzes einer anderen Phasenlage an diesem Speicherplatz zu speichern. Die weiter oben erläuterte Arbeitsweise stellt an die Zuteilungseinrichtung bzw. die Prozessoren geringere Anforderungen hinsichtlich der Gesamtheit der abzuwickelnden Steuerungsabläufe, dagegen ermöglicht die zuletzt angegebene Arbeitsweise eine noch bessere Ausnutzung der Rufstromgeneratoren, indem bei Freiwerden eines Speicherplatzes immer zum frühestmöglichen Zeitpunkt mit der Rufstromimpulsaussendung zu einem angewählten Teilnehmer begonnen werden kann. Dabei ist vorgesehen, daß im Zusammenhang mit der zuletzt erwähnten Umspeicherung ein erster Rufstromimpuls unverzüglich zu der durch die Adresse bezeichneten Teilnehmerstelle ausgesendet wird.

Die Umspeicherung einer Adresse einer Schalteinrichtung, über die Rufwechselstromimpulse auszusenden sind, von einem Wartespeicherplatz auf einen frei gewordenen Speicherplatz des Zuteilungsspeichers kann also erfolgen, wenn die Zuteilungseinrichtung nach Fig.2 oder eine der Zugriffseinrichtungen nach Fig.3 jeweils in einer Spalte des betreffenden Zuteilungsspeichers feststellt, daß sowohl ein Speicherplatz freigeworden ist, als auch ein Wartespeicherplatz in derselben Spalte noch belegt ist. In diesem Fall erfolgt die Aussendung des ersten Rufstromimpulses bereits im Zeitraster der weiteren Rufstromimpulse, also nicht bereits beim Freiwerden eines Speicherplatzes infolge Meldens seitens einer angewählten Teilnehmerstelle sondern erst dann, wenn die betreffende Spalte des Zuteilungsspeichers mit der an einem Wartespeicherplatz gespeicherten Adresse einer Schalteinrichtung durch die Zuteilungseinrichtung bzw. eine der Zugriffseinrichtungen turnusmäßig erreicht wird. Bei einer entsprechenden Abwandlung der beschriebenen Anordnungen kann aber auch die gennante Umspeicherung schon früher erfolgen. Wird z.B. in einer turnusmäßig angesteurten Spalte ein freigewordener Speicherplatz gefunden, so kann eine Adresse einer Schalteinrichtung, die an einem Wartespeicherplatz in einer anderen Spalte des Zuteilungsspeichers gespeichert ist, in diesen aufgrund Teilnehmermeldens frei gewordenen Speicherplatz umgespeichert werden. Dadurch wird also die Rufverzugszeit für den betreffenden Teilnehmer verkürzt. Eine weitere Verkürzung läßt sich erreichen, wenn die Umspeicherung nicht erst beim turnusmäßigen Erreichen der Spalte mit dem aufgrund Teilnehmermeldens frei gewordenen Speicherplatz erfolgt, sondern bereits alsbald nach dessen Freiwerden. In diesem Fall kann ein erster Rufstromimpuls in funktionellem und zeitlichem Zusammenhang mit der Umspeicherung, also zu einem früheren Zeitpunkt, also alsbald nach dem Melden des bisher gerufenen anderen Teilnehmers zur Aussendung gebracht werden als in der Rufphase, in der die Spalte des betreffenden Speicherplatzes turnusmäßig erreicht wird. Auch ist es möglich, beim Freiwerden eines Speicherplatzes nur die Aussendung eines ersten Rufstromimpulses zu bewerkstelligen und die Umspeicherung erst vorzunehmen, wenn die Spalte des betreffenden Wartespeicherplatzes turnusmäßig erreicht wird. Die Verkürzung der Rufverzugszeit entlastet sowohl die Verbindungswege (Verbindungsleitungen und Koppelfelder) als auch die sie steuernden Einrichtungen. Für die zuvor beschriebenen Abwandlungen sind die Zugriffseinrichtungen bzw. ist die Zuteilungssteuereinrichtung in entsprechender Weise anders auszugestalten, und zwar jeweils so, daß die betreffenden Steuerungsabläufe bewerkstelligt werden können.

## Patentansprüche

1. Schaltungsanordnung für Fernmeldevermittlungsanlagen, insbesondere Fernsprechvermittlungsanlagen, mit einer Anzahl von Schalteinrichtungen (P1, Pn, W, V), über die im Durchschnitt nur während eines Teiles der Gesamtheit ihrer jeweiligen Belegung Signale durch Anschaltung an eine Signalstromquelle (G) mit einer hinsichtlich der Signalstrombelastung beschränkten Leistungsfähigkeit ausgesendet werden, und mit einer einer Verteilung der Belastung dienenden, in Form von Impulsfolgen mit jeweils gleichen Impulsabständen durchgefürten Signalgabe, bei der die Impulse von über verschiedene der Schalteinrichtungen zugleich ausgesendeten Impulsfolgen zeitlich unterschiedliche Phasenlagen und dadurch eine zeitliche Versetzung von Schalteinrichtung zu Schalteinrichtung aufweisen, insbesondere eine Versetung, durch die die Impulse von verschiedenen Impulsfolgen sich hinsichtlich Impulsende und Impulsbeginn zeitlich aneinander anschließen, dadurch gekennzeichnet, daß die Schalteinrichtungen zur Signalgabe, insbesondere zur Rufstromimpulsgabe, jeweils einer der Impulsfolgen, also einer Impulsfolge mit einer bestimmten Phasenlage (r1 - r10), zuteilbar sind, und daß diese Zuteilung unter Berücksichtigung bereits bestehender und Signalgabevorgänge bewirkender Zuteilungen wahlfrei durchfürbar ist, indem jeder der Impulsfolgen mit jeweils einer bestimmten Phasenlage nicht mehr als eine durch die Belastbarkeit der Signalstromquelle (G), vorgegebene Signalstrombelastung bedingte Anzahl von Schalteinrichtungen zugeteilt wird, und daß bei gegebener Zuteilung dieser Anzahl von Schalteinrichtungen in jeder der mehreren Phasenlagen weitere Schalteinrichtungen, die für eine Signalgabe eine Zuteilung zu einer Phasenlage anforden, entweder ein Signal zum Abbruch der Verbindungsherstellung, insbesondere Besetztzeichen, erhalten, oder erst nach einer insbesondere begrenzten Verzugszeit jeweils einer solchen Phasenlage zugeteilt werden, in der die dieser zugeteilten Schalteinrichtungen weniger geworden sind als die genannte Anzahl, und bei Überschreiten der Begrenzung der Verzugszeit das Signal zum Abbruch der Verbindungsherstellung erhalten.

2. Schaltungsanordnung nach Anspruch 1, dadurch gekennzeichnet, daß bei Ausbildung der Einrichtungen als teilnehmerindividuelle oder verbindungsindividuelle Schalteinrichtungen außer Rufstromimpulsen einer kontinuierlichen Rufstromimpulsfolge ein erster Rufstromimpuls jeweils alsbald nach einem Verbindungsaufbau ausgesendet wird, und daß die Zuteilungen in der Weise durchführbar sind, daß die Anzahl von Schalteinrichtungen, die jeweils einer Impulsfolge mit einer Phasenlage zugeteilt sind, höchtens um eins differiert bezüglich der verschiedenen Impulsfolgen mit unterschiedlichen Phasenlagen.

3. Schaltungsanordnung nach Anspruch 2, dadurch gekennzeichnet, daß eine Schalteinrichtung einer einer Phasenlage entsprechenden Impulsfolge in der Weise unter Berücksichtigung der Strombelastbarkeit der Signalstromquelle zuteilbar ist, daß der auf einen ersten Rufstromimpuls nächtsfolgende Rufstromimpuls der kontinuierlichen Rufstromimpulsfolge einen zeitlichen Abstand von dem ersten Rufstromimpuls hat, der so groß wie möglich, jedoch höchstens gleich dem zeitlichen Abstand zwischen den kontinuierlichen Rufstromimpulsen ist.

4. Schaltungsanordnung nach Ansprung 2, dadurch gekennzeichnet, daß die maximale Anzahl von Schalteinrichtungen (P1, Pn, W, V), denen jeweils eine Phasenlage zugeteilt ist, durch eine Normalbelastbarkeit der Rufstromquelle (G) bestimmt ist, und daß eine Spitzenbelastbarkeit der Rufstromquelle so bemessen ist, daß sie für die Abgabe von jeweils durch die Vollendung eines Verbindungsaufbaues zeitlich bedingten ersten Rufstromimpulsen zusätzlich ausreicht.

5. Schaltungsanordnung nach Anspruch 1, dadurch gekennzeichnet, daß die Zuteilungen in einem Zuteilungsspeicher (R) gespeichert werden, in welchem an den Phasenlagen zugeordneten Speicherplätzen die Adressen der betreffenden Schalteinrichtungen gespeichert sind, daß pro Phasenlage eine bestimmte Anzahl von Speicherplätzen vorgesehen ist, und daß bei Belegtsein aller Speicherplätze in allen Phasenlagen und bei Aufbau einer weiteren Verbindung das Signal zum Abbruch der Verbindungsherstellung gegeben oder ein die Aussendung eines ersten Rufstromimpulses unterdrückendes Signal gebildet wird.

6. Schaltungsanordnung nach Aspruch 1, dadurch gekennzeichnet, daß beim Melden eines angerufenen Teilnehmers die Adresse derjenigen Schalteinrichtung, über die die Aussendung der Rufstromimpulse zuvor bewerkstelligt worden ist, in dem Zuteilungsspeicher (R) gelöscht wird, wodurch der betreffende Speicherplatz wieder frei wird, daß nach Freiwerden eines Speicherplatzes die Adresse derjenigen Schalteinrichtung, über die eine Verbindung aufgebaut wurde, wobei aber die Aussendung eines ersten Rufstromimpulses durch das diesen unterdrückende Signal verhindert wurde, an dem frei gewordenen Speicherplatz eingeschrieben wird, und daß nach Einschreiben der Adresse an den frei gewordenen Speicherplatz ein Signal zur Aussendung eines ersten Rufsignales an die betreffende Schalteinrichtung abgegeben wird.

7. Schaltungsanordnung nach Aspruch 5, dadurch gekennzeichnet, daß bei Belegtsein aller Speicherplätze in allen Phaselagen und bei Aufbau einer weiteren Verbindung über eine Schalteinrichtung deren Adresse an einem Wartespeicherplatz des Zuteilungsspeichers gespeichert wird, und daß Wartespeicherplätze in Zuordnung zu verschiedenen Phasenlagen, insbesondere zu jeder der Phasenlagen wenigstens je ein Wartespeicherplatz, vorgesehen sind, bzw. ist.

8. Schaltungsanordnung nach Anspruch 7, dadurch gekennzeichnet, daß bei Freiwerden eines Speicherplatzes die an einem Wartespeicherplatz gespeicherte Adresse ausgelesen und hier gelöscht und an dem frei gewordenen Speicherplatz gespeichert wird.

9. Schaltungsanordnung nach Anspruch 7, dadurch gekennzeichnet, daß die Adresse einer Schalteinrichtung an einem Wartespeicherplatz zusammen mit einem Zeitwert gespeichert wird, durch den ein Zeitpunkt festgelegt wird, zu oder nach dem die gespeicherte Adresse gelöscht wird.

10. Schaltungsanordnung nach Anspruch 9, dadurch gekennzeichnet, daß die Adresse gelöscht wird, wenn der betreffende Wartespeicherplatz gemäß seiner Phasenlage angesteuert wird, und wenn der Zeitpunkt dieser Ansteuerung später liegt als der durch den gespeicherten Zeitwert definierte Zeitpunkt, und daß der Zeitwert aus Uhrzeitdaten, die den Zeitpunkt der Speicherung dieses Zeitwertes angeben, und aus Wartezeitdaten additiv zusammengesetzt ist, und daß diese Wartezeitdaten einen Zeitraum angeben, der einer maximal zulässigen Rufverzugszeit entspricht.

11. Schaltungsanordnung nach Anspruch 9, dadurch gekennzeichnet, daß die Speicherplätze jeweils einer Phasenlage gleichzeitig oder sukzessive nacheinader ausgelesen werden, und daß ein Steuerwerk gemäß den gespeicherten Adressen die durch sie bezeichneten Schalteinrichtungen ansteuert und die Rufstromimpulsaussendung steuert, daß das Steuerwerk dupliziert vorgesehen ist, daß also zwei parallel, aber voneinander unabhängig arbeitende Steuerwerke (dc1, dc2) vorgesehen sind, daß jedem Steuerwerk eine Signalstromquelle (G1, G2), zugeordnet ist, und daß über jede Schalteinrichtung Impulsfolgen von Signalimpulsen alternativ von jeder der beiden Signalstromquellen aussendbar sind.

12. Schaltungsanordnung nach den Asprüchen 3 und 11, dadurch gekennzeichnet, daß in jedem der beiden Steuerwerke (dc1, dc2) ein maximaler Grenzwert gespeichert ist, durch den die Anzahl von pro Phasenlage höchstens speicherbaren Adressen festgelegt ist, daß der Grenzwert wechselbar ist und in der Regel einen Wert aufweist, der der Strombelastbarkeit jeder der beiden Signalstromquellen entspricht, und daß jede von diesen bei Überlastung ein Überlastsignal an jedes der beiden Steuerwerke abgibt, wodurch der Wert dieses Grenzwertes herabgesetzt insbesondere auf die Hälfte herabgesetzt wird.

13. Schaltungsanordnung nach Anspruch 12, dadurch gekennzeichnet, daß für jede der beiden Signalstromquellen gesondert ein Grenzwert gespeichert ist, und daß jedem der Steuerwerke in einem eigenen Teil des Zuteilungsspeichers pro Phasenlage eine erste und eine andere oder gleiche zweite Anzahl von Speicherplätzen zugeordnet ist, wobei die eine Anzahl der einen Signalstromquelle und die andere Anzahl der anderen Signalstromquelle entspricht.

**Claims**

1. Circuit arrangement for telecommunication exchanges, in particular telephone exchanges, with a number of circuits (P1, Pn, W, V), via which signals are emitted on average only during a part of the totality of their respective assignment by connection to a signal-current source (G) of a limited capacity with regard to the signal-current load, and with a signal transmission carried out in the form of pulse sequences of the same pulse intervals in each case, which serves to distribute the load and in which the pulses of pulse sequences emitted at the same time via various of the circuits have different phase positions in time and consequently a time offset from circuit to circuit, in particular an offset by which the pulses of various pulse sequences follow on from one another in time with regard to pulse end and pulse beginning, characterized in that the circuits for the signal transmission, in particular for the ringing current pulse transmission, can in each case be allocated to one of the pulse sequences, that is to say a pulse sequence of a certain phase position (r1 - r10), and in that this allocation can be carried out by choice, taking into account already existing allocations causing signal transmission operations, by each of the pulse sequences with a certain phase position in each case being allocated no more than a certain number of circuits, dictated by the signal-current load governed by the loading capacity of the signal-current source (G), and in that, with a given allocation of this number of circuits in each of the several phase positions, further circuits which require an allocation to a phase position for a signal transmission either receive a signal to terminate the establishment of a connection, in particular an engaged tone, or are in each case allocated, only after an especially limited delay time, to such a phase position in which the circuits allocated to it have become less than the said number, and receive the signal for termination of the establishment of a connection if the limitation of the delay time is exceeded.

2. Circuit arrangement according to Claim 1, characterized in that, when the circuits are designed as subscriber-individual or connection-individual circuits, apart from ringing-current pulses of a continuous ringing-current pulse sequence, a first ringing-current pulse is emitted in each case immediately after establishment of a connection, and in that the allocations can be implemented in such a way that the number of circuits which are allocated in each case to a pulse sequence with one phase position differs at most by one with respect to the various pulse sequences with different phase positions.

3. Circuit arrangement according to Claim 2, characterized in that a circuit can be allocated to a pulse sequence corresponding to a phase position in such a way, taking into account the current-loading capacity of the signal-current source, that the next ringing current pulse following a first ringing current pulse of the continuous ringing current pulse sequence has a distance in time from the first ringing current pulse which is as great as possible, but at most equal to the distance in time between the continuous ringing current pulses.

4. Circuit arrangement according to Claim 2, characterized in that the maximum number of circuits (P1, Pn, W, V), to which a phase position is allocated in each case is determined by a normal loading capacity of the ringing current source (G), and in that a peak loading capacity of the ringing current source is dimensioned such that it is adequate additionally for the transmission of first ringing current pulses, the times of which are dictated by the completion of establishment of a connection.

5. Circuit arrangement according to Claim 1, characterized in that the allocations are stored in an allocation memory (R) in which the addresses of the circuits concerned are stored at memory locations allocated to the phase positions, in that a certain number of memory locations is provided per phase position, and in that when all the memory locations in all phase positions are occupied and a further connection is established, the signal for termination of the establishment of the connection is transmitted or a signal suppressing the emission of a first ringing current pulse is formed.

6. Circuit arrangement according to Claim 1, characterized in that, when a called subscriber answers, the address of the particular circuit via which the emission of the ringing current pulses has previously been accomplished is erased in the allocation memory (R), whereupon the memory location concerned becomes free again, in that, once a memory location has become free, the address of the particular circuit via which a connection was established although the emission of a first ringing current pulse was prevented by the signal suppressing the latter, is written to the memory location which has become free, and in that, after writing the address to the memory location which has become free, a signal is transmitted for the emission of a first ringing signal to the ciruit concerned.

7. Circuit arrangement according to Claim 5, characterized in that, when all memory locations in all phase positions are occupied and a further connection is established via a circuit, the address of the latter is stored at a waiting memory location of the allocation memory, and in that waiting memory locations in assignment to various phase positions, or, in particular, at least one waiting memory location to each of the phase positions is provided.

8. Circuit arrangement according to Claim 7 characterized in that, when a memory location becomes free, the address stored at a waiting memory location is read out and erased there and is stored at the memory location which has become free.

9. Circuit arrangement according to Claim 7, characterized in that the address of a circuit is stored at a waiting memory location together with a time value, by which a point in time is fixed at or after which the stored address is erased.

10. Circuit arrangement according to Claim 9, characterized in that the address is erased if the waiting memory location concerned is selected according to its phase position, and if the point in time of this selection is later than the point in time defined by the stored time value, and in that the time value is made up additively of time-of-day data, which specifies the point in time of the storage of this time value and of waiting-time data, and in that this waiting-time data specifies a period of time which corresponds to a maximum permissible call delay time.

11. Circuit arrangement according to Claim 9, characterized in that the memory locations of one phase position in each case are read out simultaneously or successively one after the other, and in that a control unit actuates according to the stored addresses the circuits designated by them and controls the ringing current pulse emission, in that the control unit is provided in duplicate, in that consequently two parallel, but mutually independently operating control units (dc1, dc2) are provided, in that each control unit is assigned a signal-current source (G1, G2), and in that pulse sequences of signal pulses can be emitted via each circuit alternatively from each of the two signal-current sources.

12. Circuit arrangement according to Claims 3 and 11, characterized in that in each of the two control units (dc1, dc2) there is stored a maximum limit value, by which the maximum number of addresses which can be stored per phase position is fixed, in that the limit value is alterable and as a rule has a value which corresponds to the current-loading capacity of each of the two signal-current sources, and in that, in the event of overloading, each of these sources transmits an overload signal to each of the two control units, as a result of which the value of this limit value is reduced, in particular is reduced to half.

13. Circuit arrangement according to Claim 12, characterized in that a limit value is stored separately for each of the two signal-current sources, and in that to each of the control units is allocated in its own part of the allocation memory a first number of storage locations and another number or the same second number of storage locations per phase position, the one number corresponding to the one signal-current source and the other number corresponding to the other signal-current source.

**Revendications**

1. Montage pour des centraux de télécommunications, notamment des centraux téléphoniques, comportant un certain nombre de dispositifs de commutation (P1, Pn, W, V), par l'intermédiaire desquels des signaux sont émis en moyenne pendant seulement une partie de la totalité de l'occupation de ces dispositifs, au moyen du raccordement à une source (G) de courant de signaux possédant une capacité limitée du point de vue de la charge en courant de signaux, et avec une délivrance des signaux, qui sert à réaliser une répartition de la charge se présente sous la forme de trains d'impulsions possédant des intervalles respectivement identiques entre impulsions et lors de laquelle les impulsions de trains d'impulsions, émis simultanément par l'intermédiaire de différents dispositifs faisant partie des dispositifs de commutation, possèdent des positions de phase différentes dans le temps et, par conséquent, un décalage temporel d'un dispositif de commutation à un autre, et notamment un décalage tel que les impulsions faisant partie de différents trains d'impulsions se raccordent dans le temps les unes aux autres au niveau de leur fin et de leur début, caractérisé par le fait que les dispositifs de commutation utilisés pour la délivrance de signaux, notamment pour la délivrance d'impulsions de courant d'appel, peuvent être affectées respectivement à l'un des trains d'impulsions, c'est-à-dire à une suite d'impulsions possédant une position de phase déterminée (r1 - r10), et que cette affectation peut être exécutée librement en tenant compte d'affectations déjà existantes, déclenchant des processus de délivrance de signaux, par le fait qu'un nombre de dispositifs de commutation, non supérieur à un nombre conditionné par une charge en courant de signal prédéterminée par la capacité de charge de la source (G) du courant de signal, est affecté à chacun des trains d'impulsions possédant respectivement une position de phase déterminée, et que, pour une affectation déterminée de ce nombre de dispositifs de commutation dans chacune des différentes positions de phase, d'autres dispositifs de commutation, qui, pour une délivrance de signaux, requièrent une affectation à une position de phase, reçoivent un signal déclenchant l'interruption de l'établissement de la liaison, notamment un signal d'occupation, ou bien sont affectés uniquement après un retard, notamment limité, à une position de phase, dans laquelle les dispositifs de commutation associés à cette position de phase sont devenus moins nombreux que le nombre indiqué, et reçoivent, lors du dépassement de la limite du retard, le signal servant à interrompre l'établissement de la liaison.

2. Montage suivant la revendication 1, caractérisé par le fait que, dans le cas de l'agencement des dispositifs sous la forme de dispositifs de commutation prévus individuellement pour des abonnés ou des liaisons, en dehors des impulsions de courant d'appel d'un train continu d'impulsions de courant d'appel, une première impulsion de courant d'appel est émise respectivement aussitôt après l'établissement de la liaison, et que les affectations peuvent être réalisées de telle sorte que le nombre des dispositifs de commutation, qui sont affectés respectivement à un train d'impulsions possédant une position de phase, diffère au maximum de un, par rapport aux différents trains d'impulsions possédant des positions de phase différentes.

3. Montage suivant la revendication 2, caractérisé par le fait qu'un dispositif de commutation peut être affecté à un train d'impulsions, qui correspond à une position de phase, en tenant compte de la capacité de charge en courant de la source de courant de signal, de telle manière que l'impulsion de courant d'appel, qui suit immédiatement une première impulsion de courant d'appel, du train continu d'impulsions de courant d'appel est séparée de la première impulsion de courant d'appel, par un intervalle de temps aussi long que possible, mais égal au maximum à l'intervalle de temps présent entre les impulsions du train continu d'impulsions de courant d'appel.

4. Montage suivant la revendication 2, caractérisé par le fait que le nombre maximum de dispositifs de commutation (P1, Pn, W, V), auquel sont affectées des positions de phase respectives, est déterminé par une capacité de charge normale de la source de courant d'appel (G), et qu'une capacité de charge maximale de la source de courant d'appel est dimensionnée de manière à suffir, en outre, pour la délivrance de premières impulsions respectives de courant d'appel, conditionnées dans le temps par la fin de l'établissement d'une liaison.

5. Montage suivant la revendication 1, caractérisé par le fait que les affectations sont mémorisées dans une mémoire d'affectation (R), dans laquelle les adresses des dispositifs de commutation considérés sont mémorisées au niveau d'emplacements de mémoire associés à des positions de phase, que, pour chaque position de phase, il est prévu un nombre déterminé d'emplacements de mémoire, et que, dans le cas d'une occupation de tous les emplacements de mémoire dans toutes les positions de phase et lors de l'établissement d'une liaison supplémentaire, le signal servant à interrompre l'établissement de la liaison est délivré ou bien un signal interrompant l'émission d'une première impulsion de courant d'appel est formé.

6. Montage suivant la revendication 1, caractérisé par le fait que, lors de la manifestation d'un abonné appelant, l'adresse du dispositif de commutation, par l'intermédiaire duquel l'émission des impulsions de courant d'appel a été préalablement déclenchée, est effacée dans la mémoire d'affectations (R), ce qui libère à nouveau l'emplacement de mémoire considéré, qu'après la libération d'un emplacement de mémoire, l'adresse du dispositif de commutation, par l'intermédiaire duquel une liaison a été établie, mais par l'intermédiaire duquel l'émission d'une première impulsion de courant d'appel a été empêchée par un signal supprimant cette impulsion, est mémorisée à l'emplacement de mémoire devenu libre, et qu'après la mémorisation de l'adresse à l'emplacement de mémoire devenu libre, un signal est envoyé au dispositif de commutation considéré, pour l'émission d'un premier signal d'appel.

7. Montage suivant la revendication 5, caractérisé par le fait que, dans le cas d'une occupation de tous les emplacements de mémoire dans toutes les positions de phase et dans le cas de l'établissement d'une autre liaison par l'intermédiaire d'un dispositif de commutation, l'adresse de ce dispositif est mémorisée en un emplacement de mémorisation en attente de la mémoire d'affectations, et qu'il est prévu des emplacements de mémorisation en attente en association avec différentes positions de phase et notamment qu'au moins un emplacement de mémorisation en attente est prévu en association à chacune des positions de phase.

8. Montage suivant la revendication 7, caractérisé par le fait que, lors de la libération d'un emplacement de mémoire, l'adresse mémorisée en un emplacement de mémorisation en attente est lue, est effacée en cet emplacement et est mémorisée à l'emplacement de mémoire devenu libre.

9. Montage suivant la revendication 7, caractérisé par le fait que l'adresse d'un dispositif d'accumulation est mémorisée en un emplacement de mémoire d'attente conjointement avec une valeur de temps, qui fixe un instant, auquel ou à partir duquel l'adresse de mémoire est effacée.

10. Montage suivant la revendication 9, caractérisé par le fait que l'adresse est effacée lorsque l'emplacement de mémorisation en attente considéré est commandé en fonction de sa position de phase et que l'instant de cette commande est postérieur à l'instant défini par la valeur de temps mémorisée, et que la valeur de temps est formée par l'addition des données horaires indiquant l'instant de la mémorisation de cette valeur de temps, et de données de temps d'attente, et que ces données de temps d'attente indiquent un intervalle de temps, qui correspond à un retard maximum admissible d'appel.

11. Montage suivant la revendication 9, caractérisé par le fait que les emplacements de mémoire possédant respectivement une position de phase sont lus simultanément ou successivement les uns après les autres, et qu'une unité de commande sélectionne, conformément aux adresses mémorisées, les dispositifs de commutation qui sont désignés par ces adresses, et commandent l'émission de l'impulsion de courant d'appel, que l'unité de commande est prévue en double c'est-à-dire qu'il est prévu deux unités de commande ($dc1$, $dc2$) travaillant en parallèle, mais indépendamment l'une de l'autre, qu'à chaque unité de commande est associée une source ($c1$, $c2$) de courant de signal, et que des suites d'impulsions de signal peuvent être émises, par l'intermédiaire de chaque dispositif de commutation, alternativement à partir de chacune des deux sources de courant de signal.

12. Montage suivant les revendications 3 et 11, caractérisé par le fait que dans chacune des deux unités de commande ($dc1$, $dc2$) se trouve mémorisée une valeur limite maximale, grâce à laquelle le nombre maximum d'adresses pouvant être mémorisées pour chaque position de phase est fixé, que la valeur limite peut être modifiée et possède en général une valeur qui correspond à la capacité de charge en courant de chacune des deux sources de courant de signal, et que, lors d'une surcharge, chacune de ces sources envoie un signal de surcharge à chacune des deux unités de commande, ce qui entraîne une réduction du niveau de cette valeur limite, notamment de moitié.

13. Montage suivant la revendication 12, caractérisé par le fait qu'une valeur limite est mémorisée de façon particulière pour chacune des deux sources de courant de signal, et qu'à chacune des unités de commande est associé, dans une partie particulière de la mémoire d'affectations, pour chaque position de phase, un premier nombre d'emplacements de mémoire et un second nombre, différent ou identique, d'emplacements de mémoire, un nombre correspondant à une source de courant de signal et l'autre nombre correspondant à l'autre source de courant de signal.

FIG 1

FIG 2

# FIG 3